# EUROPEAN PATENT APPLICATION

(11) **EP 3 805 899 A1**
(43) Date of publication of application: **14.04.2021**
(21) Application number: 19208413.5
(22) Date of filing: 11.11.2019
(51) Int. Cl.: G06F 3/01, G02B 27/01

(54) **HEAD MOUNTED DISPLAY SYSTEM AND SCENE SCANNING METHOD THEREOF**

(30) Priority: 09.10.2019 US 201916596778
(71) Applicant: XRSpace CO., LTD., Taoyuan City 330 (TW)
(72) Inventor: TSAI, Chung-Chih, 269 Yilan County (TW); LIN, Yu-Wen, 231 New Taipei City (TW); LEE, Chia-Chun, 106 Taipei City (TW); CHIANG, Shi-Yuan, 234 New Taipei City (TW)
(74) Representative: Emde, Eric

(57) **Abstract**

A head mounted display system (100) and a scene scanning method thereof are provided. In the method, one or more first scene images and a second scene image in a real environment are obtained. A preliminary virtual environment (V1, V2) corresponding to the real environment from the first scene images is generated. The preliminary virtual environment (V1, V2) is displayed with a perspective at a visual position. The virtual position is corresponding to a real position in the real environment where the second scene image is captured. The perspective to present the virtual environment is modified in response to a change of a pose of the user's head. Accordingly, a convenient way to scan the real environment is provided, and a complete virtual environment may be obtained.

## Description

### TECHNICAL FIELD

The present disclosure generally relates to world environment simulation, in particular, to a head mounted display system and a scene scanning method thereof.

### BACKGROUND

Technologies for simulating senses, perception and/or environment, such as virtual reality (VR), augmented reality (AR), mixed reality (MR) and extended reality (XR), are popular nowadays. The aforementioned technologies can be applied in multiple fields, such as gaming, military training, healthcare, remote working, etc.

In order to let a user to perceive a simulated environment as a real environment, the space of the real environment can be scanned to generate the simulated environment which looks like the real environment. However, generating the simulated environment may take a long time. The user may move away from the previous position or the pose of the user may change during the generation of the simulated environment. After the simulated environment is presented on the display, the perspective of the simulated environment may not be the same as the perspective of the real environment.

### SUMMARY OF THE DISCLOSURE

Accordingly, the present disclosure is directed to a head mounted display system and a scene scanning method thereof, to relocate the position in the simulated environment.

In one of the exemplary embodiments, a head mounted display system includes an image capturing apparatus, a motion sensor, a display, and a processor. The head mounted display system is wearable on a user's head and is used for scanning a real environment around the user. The image capturing apparatus is used for capturing one or more first scene images and a second scene image in a real environment. The motion sensor is used for obtaining sensing data corresponding to the pose of the user's head. The processor is coupled to the image capturing apparatus, the motion sensor and the display. The processor is configured to generate a preliminary virtual environment corresponding to the real environment from the first scene images, display the preliminary virtual environment on the display with a perspective at a visual position, and modify the perspective to present the preliminary virtual environment in response to a change of the pose of the user's head. The visual position is corresponding to a real position in the real environment where the second scene image is captured by the image capturing apparatus.

In one of the exemplary embodiments, a scene scanning method is adapted for a head mounted display system wearable on a user's head and used for scanning a real environment around the user. The scene scanning method includes the following steps. One or more first scene images and a second scene image in the real environment are obtained. A preliminary virtual environment corresponding to the real environment from the scene images is generated. The preliminary virtual environment is displayed with a perspective at a visual position. The virtual position is corresponding to a real position in the real environment where the second scene image is captured. The perspective to present the preliminary virtual environment is modified in response to a change of a pose of the user's head.

In light of the foregoing, according to the head mounted display system and the scene scanning method thereof provided in one or more embodiments, a user can wear the head mounted display system to scan a real environment, and a corresponding preliminary virtual environment can be presented on the display of the head mounted display system. The perspective to present the virtual environment is corresponding to a perspective that the user views in the real environment without wearing the head mounted display system. Accordingly, the user can review the preliminary virtual environment first before a completed virtual environment is generated, and the perspective corresponding to the virtual environment could be aligned with the perspective corresponding to the real environment.

It should be understood, however, that this Summary may not contain all of the aspects and embodiments of the present disclosure, is not meant to be limiting or restrictive in any manner, and that the invention as disclosed herein is and will be understood by those of ordinary skill in the art to encompass obvious improvements and modifications thereto.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a block diagram illustrating a head mounted display system according to one of the exemplary embodiments of the disclosure.
FIG. 2 is a flowchart illustrating a scene scanning method according to one of the exemplary embodiments of the disclosure.
FIGS. 3A-3D are schematic diagrams illustrating images displayed on the display.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

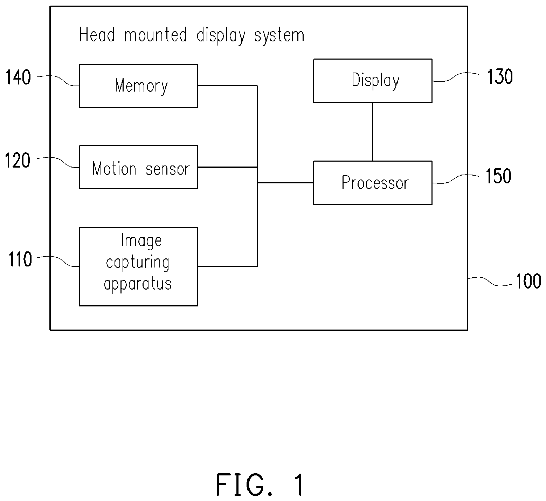

FIG. 1 is a block diagram illustrating a head mounted display system 100 according to one of the exemplary embodiments of the disclosure. Referring to FIG. 1, the head mounted display system 100 includes, but not limited to, an image capturing apparatus 110, a motion sensor 120, a display 130, a memory 140, and a processor 150. The head mounted display system 100 is adapted for VR, AR, MR, XR or other reality related technology.

The image capturing apparatus 110 may be a camera, a video recorder, or other sensors capable of capturing images. The image capturing apparatus 110 is disposed at the main body of the head mounted display system 100 to capture outside. For example, when a user wears the head mounted display system 100, the image capturing apparatus 110 may be at the position in front of eyes of the user. In some embodiments, the head mounted display system 100 may further includes depth sensor, a time-of-flight camera, or other sensors capable of obtaining depth or distance information of external objects.

The motion sensor 120 may be an accelerometer, a gyroscope, a magnetometer, a laser sensor, an inertial measurement unit (IMU), an infrared ray (IR) sensor, an image sensor, a depth camera, or any combination of aforementioned sensors. In the embodiment of the disclosure, the motion sensor 120 is used for sensing the motion of the main body of the head mounted display system 100, to generate corresponding sensing data (such as 3-degree of freedom (3-DoF) or 6-DoF information) corresponding to a pose of the user's head.

The display 130 may be a liquid-crystal display (LCD), a light-emitting diode (LED) display, an organic light-emitting diode (OLED) display, or other displays. In the embodiment of the disclosure, the display 130 is used for displaying images. It should be noted that, in some embodiments, the display 130 may be a display of an external apparatus (such as a smart phone, a tablet, or the likes), and the external apparatus can be placed on the main body of the head mounted display system 100.

The memory 140 may be any type of a fixed or movable Random-Access Memory (RAM), a Read-Only Memory (ROM), a flash memory, a similar device or a combination of the above devices. The memory 140 records program codes, device configurations, buffer data or permanent data (such as scene images, virtual environment, sensing data, etc.), and these data would be introduced later.

The processor 150 is coupled to the image capturing apparatus 110, the motion sensor 120, the display 130 and the memory 140. The processor 150 is configured to load the program codes stored in the memory 140, to perform a procedure of the exemplary embodiment of the disclosure.

In some embodiments, functions of the processor 150 may be implemented by using a programmable unit such as a central processing unit (CPU), a microprocessor, a microcontroller, a digital signal processing (DSP) chip, a field programmable gate array (FPGA), etc. The functions of the processor 150 may also be implemented by an independent electronic device or an integrated circuit (IC), and operations of the processor 150 may also be implemented by software.

To better understand the operating process provided in one or more embodiments of the disclosure, several embodiments will be exemplified below to elaborate the operating process of the head mounted display system 100. The devices and modules in the head mounted display system 100 are applied in the following embodiments to explain the scene scanning method provided herein. Each step of the method can be adjusted according to actual implementation situations and should not be limited to what is described herein.

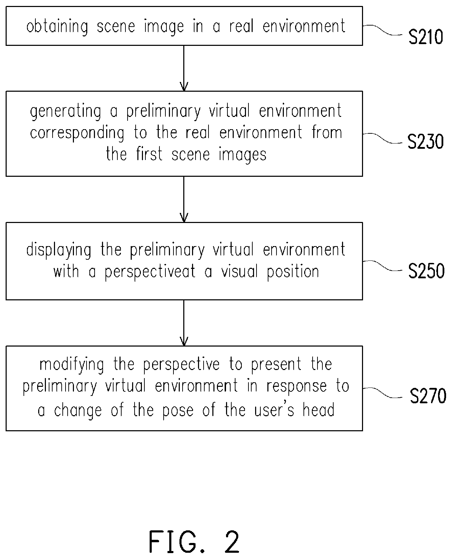

FIG. 2 is a flowchart illustrating a scene scanning method according to one of the exemplary embodiments of the disclosure. Referring to FIG. 2, the processor 150 obtains one or more scene images in a real environment through the image capturing apparatus 110 (step S210). Specifically, it is assumed that a user wears the head mounted display system 100 on his/her head. The user may move or rotate the head mounted display system 100, so that the image capturing apparatus 110 may capture toward a direction corresponding to the pose of the head mounted display system 100. The image captured by the image capturing apparatus 110 in the real environment (such as a room, an office, etc.) would be called as the scene image in the embodiments of the present disclosure, but not limited thereto. The processor 150 may trigger the image capturing apparatus 110 to capture the scene image if the main body of the head mounted display system 100 rotates a certain angle (such as 15, 20, or 30 degrees in x, y or z axis, wherein x, y and z axis are vertical to each other) each time or if the a time interval is expired each time. For example, regarding a construction of a 360-degree virtual environment, it is assumed that a view angle of each scene image is 15 degrees away from adjacent scene image. The user can make a 360-degree rotation horizontally with the head mounted display system 100, and then 24 scene images may be obtained from the image capturing apparatus 110.

In one embodiment, the scene images include one or more first scene images and a second scene image. The first scene images represent scene images captured before a preliminary virtual environment is generated, and the second scene image represents a scene image captured after the preliminary virtual environment is generated. The generation of the preliminary virtual environment would be introduced later.

At the same time, the processor 150 obtains sensing data from the motion sensor 120, and determines the position, the pose, and the orientation of the head mounted display system 100 according to the sensing data. For example, an acceleration, a rotation and a magnetic field included in the sensing data can be determined as the information of orientation, the position can be determined through double integral on the acceleration, and the pose can be determined according to the orientation and the position information. For another example, the processor 150 extracts specific features (such as pattern, object, etc.) in each scene image, determines correspondence (such as distance difference in the scene image, 3-dimension (3D) angle, etc.) among features of multiple scene image, and estimates the pose based on the determined correspondence.

The processor 150 may associate each scene image with at least one of a corresponding position, a corresponding orientation, and a corresponding pose of the head mounted display system 100 according to the sensing data. That is, every time a scene image is captured, a current position, a current orientation and/or a current pose of the head mounted display system 100 would be associated with the scene image.

It should be noted that, when a user moves or rotates the head mounted display system too fast or without a regular speed, the quality of the scene image may not be suitable for constructing the virtual environment, or a virtual environment with low quality may be constructed. The processor 150 may determine a pose change between two adjacent scene images, and generate a visual or audio notification in response to the pose change meting a threshold. The pose change may include at least one of changes of rotation angle, scene, and elapsed time. For example, if a default rotation angle is 20 degrees but the head mounted display system 100 rotates 30 degrees within 1 second, the processor 150 may present a visual message "turn back!" on the display 130. After the head mounted display system 100 turns back to a previous direction, the image capturing apparatus 110 can capture the scene image again.

The processor 150 generates a preliminary virtual environment corresponding to the real environment according to the first scene images (step S230). The virtual environment may be a 2D or 3D space model. In one embodiment, the processor 150 generates the preliminary virtual environment with a model format of point cloud, 3D mesh, or the likes. It means that the preliminary virtual environment is made by the model format of point cloud and 3-dimension mesh. Taking the point cloud diagram as an example, the processor 150 obtains features (such as color, line, pattern, etc.) from the scene image and depth information of specific pixels/blocks in the scene image. The features of these pixels/blocks would be mapped into specific 3D spatial coordinates in a blank virtual environment according to the corresponding depth and position. After all of these pixels/blocks are mapped, the preliminary virtual environment would be generated.

In another embodiment, the processor 150 obtains an optimized virtual environment with another model format different from the model format of point cloud. The model format of the optimized virtual environment may be STL, FBX, COLLADA, 3DS, OBJ, or other formats. It means that the optimized virtual environment is not made by a model format of point cloud. Due to the limitation of computing performance, the optimized virtual environment generated by the processor 150 may take a long time (such as over 10, 20, or 30 minutes). In one embodiment, the head mounted display system 100 may upload the preliminary virtual environment generated from the first scene images to a remote server (such as a desktop computer, a laptop, or a work station) via a local or wide area network. The time for generating an optimized virtual environment based on the preliminary virtual environment by the remote server may less than the processor 150. After the construction of the optimized virtual environment is finished, the head mounted display system 100 may download the optimized virtual environment from the remote server.

It should be noted that, the model format of the optimized virtual environment may have better quality than the model format of the preliminary virtual environment in this embodiment, but not limited thereto. In addition, the procedure to generate the preliminary/ optimal virtual environment may further include motion blur deduction, smoothing processing, white balance adjustment, etc., and the procedure may be modified based on actual requirement.

In response to generating the preliminary virtual environment, the processor 150 may display the preliminary virtual environment with a perspective at a visual position on the display 130 (step S250). Specifically, the visual position is corresponding to a real position in the real environment where the second scene image is captured by the image capturing apparatus 110. During the construction of the preliminary virtual environment, the head mounted display system 100 may be moved or rotated, and depart from a previous position and/or a previous orientation. In response to the environment construction being finished, the processor 150 activate the image capturing apparatus 110, and the image capturing apparatus 110 may capture one or more second scene images at a real position in the real environment.

Then, the processor 150 may compare the first scene images and the second scene image, and determine their correspondences. For example, the processor 150 may extract specific features (such as shape, object, etc.) in each first scene image and each second scene image, accumulate an existing number that one specific feature is existed in both the first scene image and the second scene image, and determine the correspondences among the first scene image and the second scene image according to the existed feature and the existing number thereof. The processor 150 may select a scene image having correspondence larger than a threshold, and determine a virtual position corresponding to the selected scene image in the virtual environment. Then, the determined virtual position would be corresponding to the real position of the second scene image. In addition, the selected scene image is corresponding to a specific perspective. The processor 150 may modify the perspective in the virtual environment according to the determined virtual position to be the same as the perspective seen by the user in the real environment without the head mounted display system 100.

For another example, the processor 150 may determine the perspective at the visual position in the virtual environment according to the corresponding pose of each first scene image. Each first scene image or each second scene image is corresponding to a specific pose of the user's head. The processor 150 may determine the difference among the corresponding poses of the first scene images and the second scene image. One scene image having minimal difference would be selected, and the processor 150 may determine the virtual position and the perspective according to the pose corresponding to the selected scene image.

Accordingly, the image of the virtual environment at a specific virtual position with a specific perspective displayed on the display 130 would be the same as the scene seen by a user at a real position with a specific perspective. It should be noted that, in order to present the virtual environment faster, the preliminary virtual environment may be displayed in the step S250. However, without the hardware or network limitation of the head mounted display system 100, the optimal virtual environment may be displayed in the step S250.

In addition, the processor 150 may further display both the preliminary virtual environment and the second scene image in a picture-in-picture mode on the display 130. The picture-in-picture mode may be that, the preliminary virtual environment is displayed in full-screen mode, and the second scene image is displayed in a window mode with less size that the preliminary virtual environment. Accordingly, the user can check whether the perspective at the virtual position in the virtual environment is corresponding to the perspective at the real position in the real environment. It should be noted that, the image sizes to present the preliminary virtual environment and the second scene image may be modified based on actual requirement.

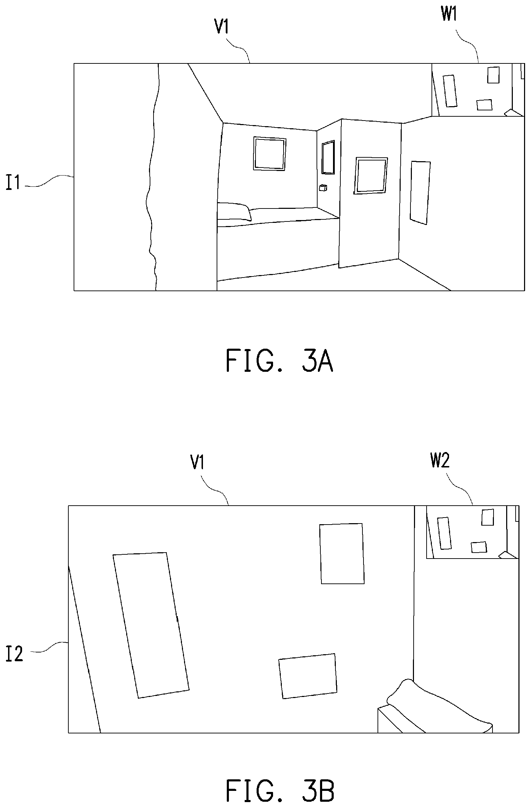

For example, FIGS. 3A-3D are schematic diagrams illustrating images displayed on the display 130. Referring to FIG. 3A first, a virtual environment VI is generated in an image I1 displayed on the display 130. A window W1 shows that the perspective at a real position is different from the perspective at a virtual position to present the virtual environment VI. Referring to FIG. 3B, after the virtual position is relocated, the window W2 shows that the perspective at the real position is the same as the perspective at the modified virtual position to present the virtual environment V1 in the image 12.

Then, the processor 150 may modify the perspective to present the preliminary virtual environment in response to a change of the pose of the user's head based on the sensing data (step S270). Specifically, the preliminary virtual environment may have abnormal parts (e.g., holes, spikes, tunnels, etc.), so that one or more blank or hollowed portion may exist in the preliminary virtual environment. The user can move or rotate the head mounted display system 100 to check the blank or hollowed portion. The processor 150 would track the pose of the user's head through the motion sensor 120, and modify the perspective according to the tracked pose. For example, if a 6-degree of freedom (6-DoF) information is that the head mounted display system 100 rotates 60 degrees horizontally, the processor 150 would change the perspective to turn to a direction having an angle of 60 degrees with a previous direction. Accordingly, it is easier for a user to check and re-scan the abnormal parts of the virtual environment.

In one embodiment, the processor 150 may further display both the preliminary virtual environment and a see-through view of the real environment in a picture-in-picture mode on the display 130 before capturing the one or more third scene images in the real environment through the image capturing apparatus 110. The picture-in-picture mode may be that the preliminary virtual environment is displayed in full-screen mode, and the see-through view is displayed in a window mode with less size that the preliminary virtual environment. Taking FIG. 3B as an example, the window W2 shows a view in the real environment. Accordingly, the user may know a view to-be-captured in a scene image for the abnormal parts. It should be noted that the image sizes to present the preliminary virtual environment and the see-through view may be modified based on actual requirement.

In response to a user trigger the image capturing apparatus 110 to capturing one or more third scene images in the real environment for the abnormal parts, the processor 150 may regenerate the preliminary virtual environment from the first scene image and a part or whole of the third scene images. The processor 150 selects key images from the first scene image and the third scene images to construct the preliminary virtual environment again. The description of constructing manner may be reference to step S230, and the related description would be omitted.

Then, the processor 150 may display the regenerated preliminary virtual environment on the display 130 with a second perspective at a second visual position in response to generating the regenerated preliminary virtual environment. Because a user may move or rotate the head mounted display system 100 during the construction of the regenerated preliminary virtual environment, the second visual position should also be relocated. The image capturing apparatus 110 may capture one or more fourth scene images in response to the regenerated preliminary virtual environment being generated, and the second visual position would be corresponding to a second real position in the real environment where the fourth scene image is captured by the image capturing apparatus 110. The description of relocation may be reference to step S250, and the related description would be omitted.

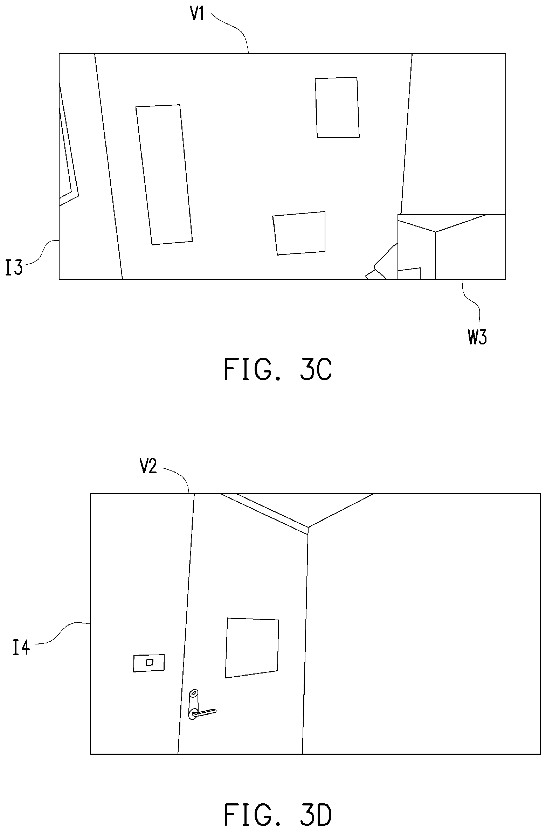

For example, referring to FIG. 3C first, a virtual environment VI is generated in an image I3 displayed on the display 130 after re-scanning for the virtual environment VI of FIG. 3B. The window W3 shows that the perspective at a real position is different from the perspective at a virtual position to present the virtual environment V2. Referring to FIG. 3D, after the virtual position is relocated, the perspective at the real position is the same as the perspective at the modified virtual position to present the virtual environment V2 in the image 14.

In one embodiment, the processor 150 may analyze the preliminary virtual environment, to find the abnormal parts in the preliminary virtual environment or the regenerated preliminary virtual environment. The processor 150 determines an analyzed result which may include the number of the third scene images to be rescanned and/or the pose of the user's head to capture the third scene images. In some embodiments, the processor 150 may further provide a level or a score for the completeness of the preliminary virtual environment based on the analyzed result. For example, the score may be related to the number of holes in the preliminary virtual environment. The level or the score could be used to determine whether to re-scan the real environment. In some embodiments, after the regenerated preliminary virtual environment is generated, the processor 150 may perform one, two, or all of the aforementioned processes (i.e., analyzing the abnormal part, determining the analyzed result, and providing a level or a score).

In one embodiment, one or more users wear the head mounted display systems 100. It means that multiple users can rescan the real environment around them together. The display 130 of each head mounted display systems 100 may present the analyzed result and/or the preliminary virtual environment, and at least one of the head mounted display systems 100 may collect all third scene images obtained by all head mounted display systems 100.

In another embodiment, the head mounted display system 100 may request a machine (for example, a drone) to rescan the abnormal parts in the preliminary virtual environment. The drone is equipped with an image capturing apparatus. The processor 150 may instruct the drone to move to a specific position and a specific direction to capture a part or whole of the third scene images based on the analyzed result, and the drone may transmit the captured third scene image to the head mounted display system 100.

In one embodiment, the head mounted display system 100 may upload the preliminary virtual environment and the at least one third scene image to a remote server, and download a completed virtual environment from the remote server. The completed virtual environment is generated based on the preliminary virtual environment and the at least one third scene image. For example, the remote server may adjust the depths of some areas in the virtual environment and further perform the smooth processing on the virtual environment. The model format of the completed virtual environment may be STL, FBX, COLLADA, 3DS, OBJ, or other formats. It means that the completed virtual environment is not made by a model format of point cloud. Accordingly, comparing to the preliminary virtual environment, the completed virtual environment may have less or no abnormal part.

In summary, the exemplary embodiments described above depicted head mounted display system and scene scanning method. A virtual environment can be displayed with a perspective at a visual position corresponding to a real position in a real environment, and the perspective can further be modified along with the motion of the head mounted display system. Accordingly, a convenient way to scan the real environment is provided, and a complete virtual environment may be obtained.

## Claims

1. A head mounted display system (100), wearable on a user's head and scanning a real environment around the user, the head mounted display system (100) comprising:
an image capturing apparatus (110), capturing first scene images and a second scene image in the real environment;
a motion sensor (120), obtaining sensing data corresponding to a pose of the user's head;
a display (130); and
a processor (150), coupled to the image capturing apparatus (110), the motion sensor (120) and the display (130), and **characterized in that** the processor is configured for:
generating a preliminary virtual environment (V1, V2) corresponding to the real environment from the first scene images;
displaying the preliminary virtual environment (V1, V2) on the display (130) with a perspective at a visual position, wherein the visual position is corresponding to a real position in the real environment where the second scene image is captured by the image capturing apparatus (110); and
modifying the perspective to present the preliminary virtual environment (V1, V2) in response to a change of the pose of the user's head.

2. A scene scanning method, adapted for a head mounted display system (100) wearable on a user's head and used for scanning a real environment around the user, **characterized by** the scene scanning method comprising:
obtaining first scene images and a second scene image in the real environment;
generating a preliminary virtual environment (V1, V2) corresponding to the real environment from the first scene images;
displaying the preliminary virtual environment (V1, V2) with a perspective at a visual position, wherein the visual position is corresponding to a real position in the real environment where the second scene image is captured; and
modifying the perspective to present the preliminary virtual environment (V1, V2) in response to a change of a pose of the user's head.

3. The head mounted display system (100) of claim 1, **characterized in that** the processor (150) is configured for:
capturing at least one third scene image in the real environment in response to displaying the preliminary virtual environment (V1, V2) on the display (130), or the scene scanning method of claim 2, **characterized in that** after the step of displaying the preliminary virtual environment (V1, V2), further comprising:
capturing at least one third scene image in the real environment in response to displaying the preliminary virtual environment (V1, V2) on a display (130) of the head mounted display system (100).

4. The head mounted display system (100) of claim 3, **characterized in that** the processor (150) is configured for:
displaying both the preliminary virtual environment (V1, V2) and a see-through view (W2) of the real environment in a picture-in-picture mode on the display (130) before capturing the at least one third scene image in the real environment through the image capturing apparatus (110), or the scene scanning method of claim 3, **characterized in that** the step of displaying the preliminary virtual environment (V1, V2) comprises:
displaying both the preliminary virtual environment (V1, V2) and a see-through view (W2) of the real environment in a picture-in-picture mode before capturing the at least one third scene image in the real environment.

5. The head mounted display system (100) of claim 3, **characterized in that** the processor (150) is configured for:
displaying both the preliminary virtual environment (V1, V2) and the second scene image in a picture-in-picture mode on the display (130) before capturing the at least one third scene image in the real environment through the image capturing apparatus (110), or the scene scanning method of claim 3, **characterized in that** the step of displaying the preliminary virtual environment (V1, V2) comprises:
displaying both the preliminary virtual environment (V1, V2) and the second scene image in a picture-in-picture mode before capturing the at least one third scene image in the real environment.

6. The head mounted display system (100) of claim 3, **characterized in that** the processor (150) is configured for:
uploading the preliminary virtual environment (V1, V2) and the at least one third scene image to a remote server; and
downloading a completed virtual environment from the remote server, wherein the completed virtual environment is generated based on the preliminary virtual environment (V1, V2) and the at least one third scene image, or the scene scanning method of claim 3, **characterized in that** the step of capturing the at least one third scene image, further comprising:
uploading the preliminary virtual environment (V1, V2) and the at least one third scene image to a remote server; and
downloading a completed virtual environment from the remote server, wherein the completed virtual environment is generated based on the preliminary virtual environment (V1, V2) and the at least one third scene image.

7. The head mounted display system (100) of claim 6 or the scene scanning method of claim 6, **characterized in that** the preliminary virtual environment (V1, V2) is made by a model format of point cloud and 3-dimension mesh, and the completed virtual environment is not made by a model format of point cloud.

8. The head mounted display system (100) of claim 3, **characterized in that** the processor (150) is configured for:
regenerating the preliminary virtual environment (V1, V2) from the first scene images and a part or whole of the at least one third scene image;
displaying the regenerated preliminary virtual environment (V1, V2) on the display (130) with a second perspective at a second visual position, wherein the second visual position is corresponding to a second real position in the real environment where a fourth scene image is captured by the image capturing apparatus (110), or the scene scanning method of claim 3, **characterized in that** after the step of capturing the at least one third scene image, further comprising:
regenerating the preliminary virtual environment (V1, V2) from the first scene images and a part or whole of the at least one third scene image;
displaying the regenerated preliminary virtual environment (V1, V2) with a second perspective at a second visual position, wherein the second visual position is corresponding to a second real position in the real environment where a fourth scene image.

9. The head mounted display system (100) of claim 1, **characterized in that** the processor (150) is configured for:
associating each of the first scene images with a corresponding pose of the head mounted display system (100) according to the sensing data; and
determining the perspective at the visual position in the virtual environment according to the corresponding pose of each of the first scene images, or the scene scanning method of claim 2, **characterized in that** before the step of displaying the preliminary virtual environment (V1, V2), further comprising:
associating each of the first scene images with a corresponding pose of the head mounted display system (100) according to the sensing data; and
determining the perspective at the visual position in the virtual environment according to the corresponding pose of each of the first scene images.

10. The head mounted display system (100) of claim 1, **characterized in that** the processor (150) is configured for:
uploading the preliminary virtual environment (V1, V2) to a remote server; and
downloading an optimized virtual environment from the remote server, wherein the optimized virtual environment is generated based on the preliminary virtual environment (V1, V2), or the scene scanning method of claim 2, **characterized in that** after the step of generating the preliminary virtual environment (V1, V2) corresponding to the real environment from the first scene images, further comprising:
uploading the preliminary virtual environment (V1, V2) to a remote server; and
downloading an optimized virtual environment from the remote server, wherein the optimized virtual environment is generated based on the preliminary virtual environment (V1, V2).

11. The head mounted display system (100) of claim 1 or the scene scanning method of claim 2, **characterized in that** the preliminary virtual environment (V1, V2) is made by a model format of point cloud and 3-dimension mesh.
